# EUROPEAN PATENT APPLICATION

(11) **EP 4 737 307 A1**
(43) Date of publication of application: **06.05.2026**
(21) Application number: 23946319.3
(22) Date of filing: 16.08.2023
(51) Int. Cl.: B63H 20/08, H02K 9/19

(54) **ELECTRIC OUTBOARD MOTOR ALUMINUM PLATE-FIN HEAT DISSIPATION DEVICE**

(30) Priority: 24.07.2023 CN 202321954853 U
(71) Applicant: EXPLOMAR (SUZHOU) ENERGY TECHNOLOGY CO., LTD., Jiangsu 215558 (CN)
(72) Inventor: WEI, Jingyi, hangzhou, Jiangsu 215558 (CN); LI, Baoshi, Suzhou, Jiangsu 215558 (CN); MA, Shimeng, Suzhou, Jiangsu 215558 (CN)
(74) Representative: Chung, Hoi Kan
(86) International application number: PCT/CN2023/113295
(87) International publication number: WO 2025/020238

(57) **Abstract**

The present invention relates to an electric outboard motor aluminum plate-fin heat dissipation device, comprising an underwater cooling housing, a first cooling cavity and a second cooling cavity being formed in the underwater cooling housing, and the first cooling cavity being communicated with the second cooling cavity by means of a water flow channel. The underwater cooling housing is connected to a sealing cover for sealing the first cooling cavity and the second cooling cavity; the sealing cover is connected to a coolant inlet communicated with the first cooling cavity, and the scaling cover is connected to a coolant outlet communicated with the second cooling cavity, the coolant inlet and the coolant outlet being cyclically communicated with each other by means of a cooling pipe and a cooling recirculating pump. A first heat exchange filling block and a second heat exchange filling block which are respectively matched with the first cooling cavity and the second cooling cavity in shape are embedded in the first cooling cavity and the second cooling cavity respectively, surfaces of the first heat exchange filling block and the second heat exchange filling block both being provided with a plurality of flow guide channels for the coolant to flow. The present invention can reduce the weight while ensuring a heat dissipation effect.

## Description

### TECHNICAL FIELD

The present invention belongs to the field of electric outboard motor machinery, and particularly relates to an electric outboard motor aluminum plate-fin heat dissipation device.

### BACKGROUND

Currently, traditional outboard motors generally use water cooling.

Components of fuel-powered outboard motors that require heat dissipation include: 1. an engine; and 2. a reducer.

Heat dissipation approaches of the engine: seawater is drawn in by the shaft-driven pump and circulated in the waterway of the engine.

Heat dissipation approaches of the reducer: the heat generated by gear friction is conducted by means of the lubricating oil, and heat exchange is performed between the inner and outer surfaces of the housing.

Advantages: the heat dissipation waterway is simple in structure and low in parasitic power.

Disadvantages: the impeller of the shaft-driven pump is a rubber member and is prone to aging, requiring regular replacement; there is no heat dissipation protection after the engine is shut down, increasing the risk of seawater corrosion in the waterway of the engine; each shutdown requires a 3 to 5 minute freshwater flush of the pipe of the engine, making maintenance troublesome; and since the efficiency of fuel-powered motor products is far lower than that of electric motor products, the fuel-powered motor products feature high heat dissipation power, a wide variety of parts and components, heavy weight, and large volume.

Cooling components and heat dissipation approaches of electric outboard motors:

Components of the electric outboard motors that require heat dissipation include: a motor, an inverter, and a reducer.

Mainstream heat dissipation approaches in the electric outboard motor industry: 1. internal water cooling and external air cooling heat dissipation with a plate heat exchanger, 2. internal water cooling and external water cooling heat dissipation with a plate heat exchanger, and 3. integrated internal water cooling heat dissipation.

Due to the high heat dissipation power requirements of high-power outboard motors, the second solution is generally used, such as a patent of YDKJ (Guangdong ePropulsion Co., Ltd.): PCT/CN2021/130142 (as shown in FIG. 1, where A is a heat exchanger, B is a heating component, AA is a first cooling loop, BB is an external cooling loop, and CC is a second cooling loop). This approach has the same disadvantages as fuel-powered outboard motors.

The related design of using water cooling in outboard motors may increase the weight of the outboard motors, which is not conducive to the lightweight design of the outboard motors. Therefore, to improve the cooling effects and capabilities of the outboard motors, and considering the lightweight design, an aluminum plate-fin heat dissipation device is used.

### SUMMARY

### Technical Problem

While ensuring that an electric outboard motor can meet heat dissipation, how to reduce the weight of the electric outboard motor while ensuring effective heat dissipation and reduce the weight while improving working efficiency.

### Technical Solution

To solve the above technical problem, the purpose of the present invention is to provide an electric outboard motor aluminum plate-fin heat dissipation device.

To achieve the above purpose, the present invention adopts the following technical solution:

An electric outboard motor aluminum plate-fin heat dissipation device, including an underwater cooling housing, where a first cooling cavity and a second cooling cavity are disposed in the underwater cooling housing, the first cooling cavity is communicated with the second cooling cavity by means of a water flow channel, inner walls of the first cooling cavity and the second cooling cavity both are provided with a plurality of spaced and vertical inner heat dissipation ribs, outer walls of the first cooling cavity and the second cooling cavity both are provided with a plurality of spaced and transverse outer heat dissipation ribs, the underwater cooling housing is connected to a sealing cover for sealing the first cooling cavity and the second cooling cavity, the sealing cover is connected to a coolant inlet communicated with the first cooling cavity, the sealing cover is connected to a coolant outlet communicated with the second cooling cavity, and the coolant inlet and the coolant outlet are cyclically communicated with each other by means of a cooling pipe and a cooling recirculating pump; and a first heat exchange filling block and a second heat exchange filling block which are respectively matched with the first cooling cavity and the second cooling cavity in shape are embedded in the first cooling cavity and the second cooling cavity respectively, and surfaces of the first heat exchange filling block and the second heat exchange filling block both are provided with a plurality of flow guide channels for coolant to flow.

Preferably, according to the electric outboard motor aluminum plate-fin heat dissipation device, the underwater cooling housing is a housing made of an aluminum alloy material.

Preferably, according to the electric outboard motor aluminum plate-fin heat dissipation device, the cooling pipe is communicated with built-in heat dissipation recirculating pipes of an inverter and a motor.

Preferably, according to the electric outboard motor aluminum plate-fin heat dissipation device, the first heat exchange filling block and the second heat exchange filling block both are of structures with wide upper portions and narrow lower portions.

Preferably, according to the electric outboard motor aluminum plate-fin heat dissipation device, the cooling recirculating pump is externally connected to an expansion kettle by means of the cooling pipe.

Preferably, according to the electric outboard motor aluminum plate-fin heat dissipation device, the coolant in the cooling recirculating pump is 50% ethylene glycol.

Preferably, according to the electric outboard motor aluminum plate-fin heat dissipation device, the first heat exchange filling block and the second heat exchange filling block are connected to the sealing cover by means of bolts.

Preferably, according to the electric outboard motor aluminum plate-fin heat dissipation device, the first heat exchange filling block and the second heat exchange filling block both are heat exchange filling blocks made of an anti-corrosion hard plastic material.

The above description is only an overview of the technical solution of the present invention, and in order to understand the technical means of the present invention more clearly to implement them in accordance with the content of the specification, the preferred embodiments of the present invention are described in detail below with reference to the accompanying drawings.

### Beneficial effects:

By the above solution, the present invention at least has the following advantages:
While ensuring that an electric outboard motor can meet heat dissipation, the present invention can reduce the weight of the electric outboard motor while ensuring effective heat dissipation and reduce the weight while improving working efficiency.

### BRIEF DESCRIPTION OF THE DRAWINGS

To describe the technical solutions in the embodiments of the present invention more clearly, the following briefly describes the accompanying drawings required for describing the embodiments. It should be understood that the following accompanying drawings show merely some embodiments of the present invention, and therefore should not be regarded as limiting the scope of the present invention. Those of ordinary skill in the art may still derive other related accompanying drawings from these accompanying drawings without creative efforts.

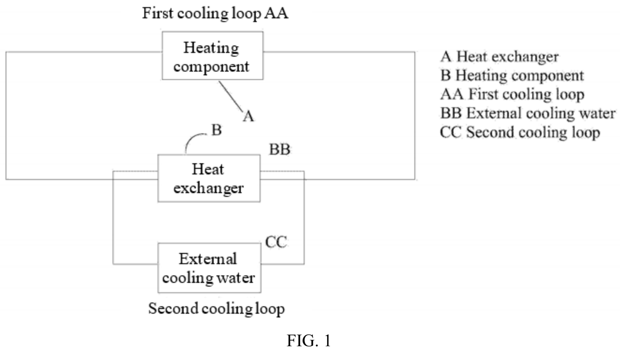

FIG. 1 is an existing electric outboard motor cooling system;
FIG. 2 is a schematic structural diagram of the present invention;
FIG. 3 is a sectional view of FIG. 2;
FIG. 4 is a schematic exploded view of an underwater cooling housing of the present invention;
FIG. 5 is a schematic structural diagram of an underwater cooling housing of the present invention;
FIG. 6 is a schematic structural diagram of a first heat exchange filling block of the present invention; and
FIG. 7 is a schematic structural diagram of a second heat exchange filling block of the present invention.

### DETAILED DESCRIPTION OF THE EMBODIMENTS

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are some but not all of the embodiments of the present application. Assemblies of the embodiments of the present application described and illustrated in the accompanying drawings can usually be arranged and designed in various different configurations.

Therefore, the detailed description of the embodiments of the present application provided in the accompanying drawings is not intended to limit the scope of the claimed application, but only to represent selected embodiments of the present application. All other embodiments obtained by those of ordinary skill in the art based on the embodiments of the present application without creative efforts shall fall within the protection scope of the present application.

### Embodiment

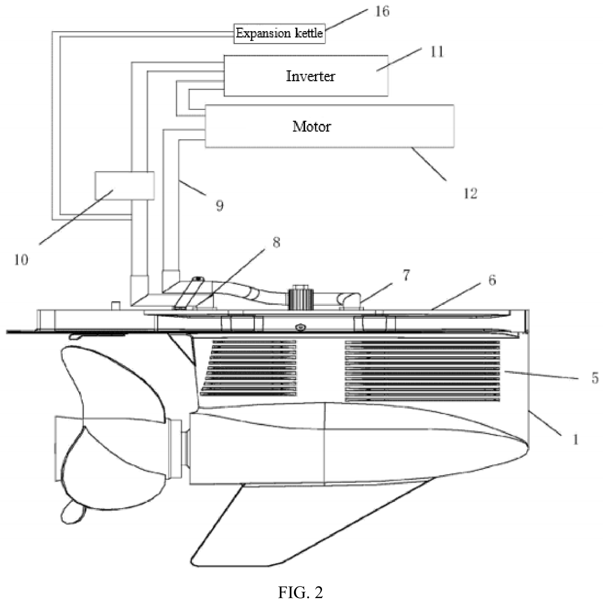

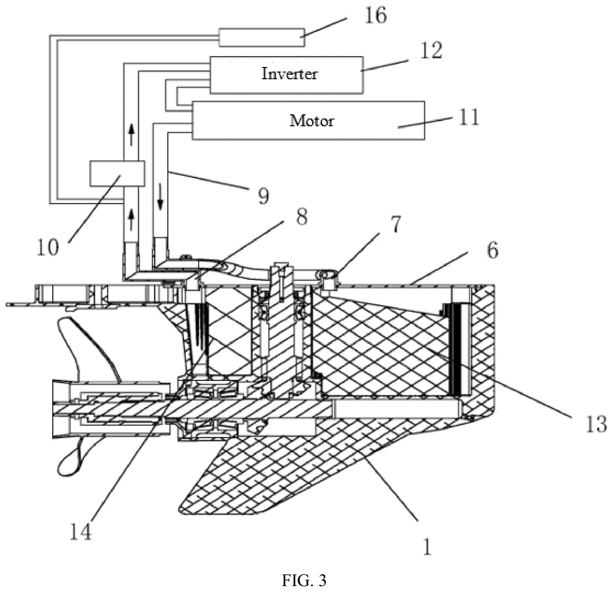

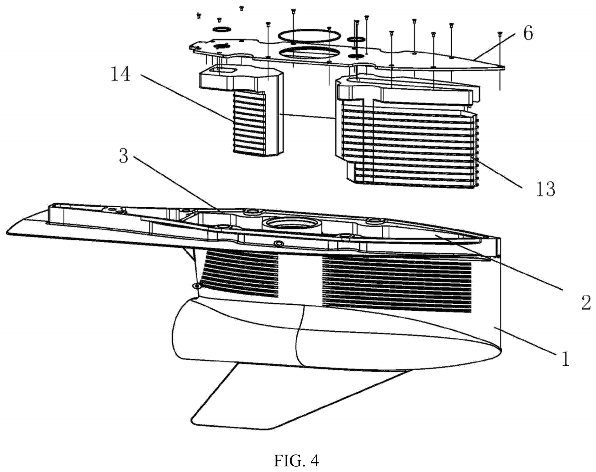

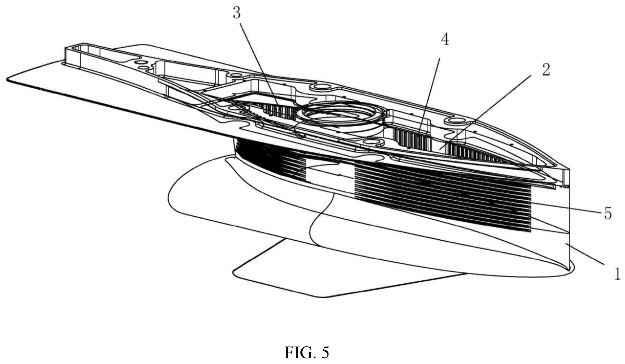

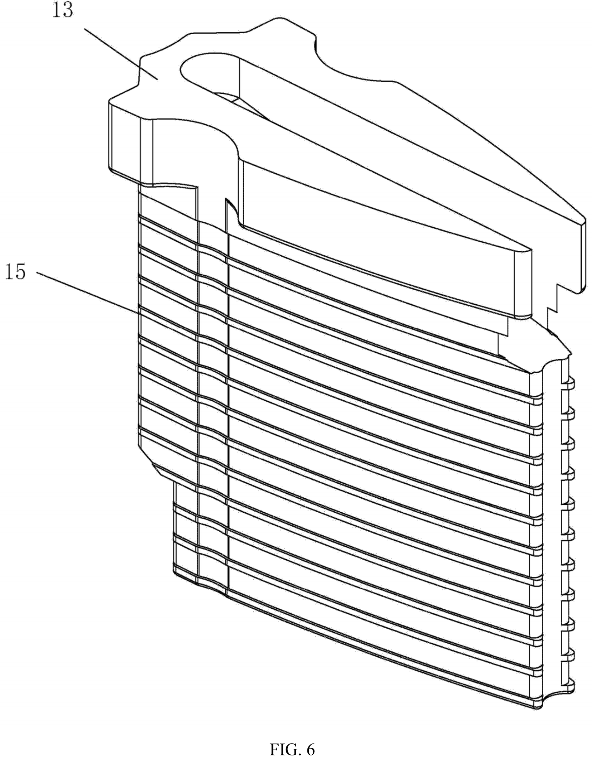

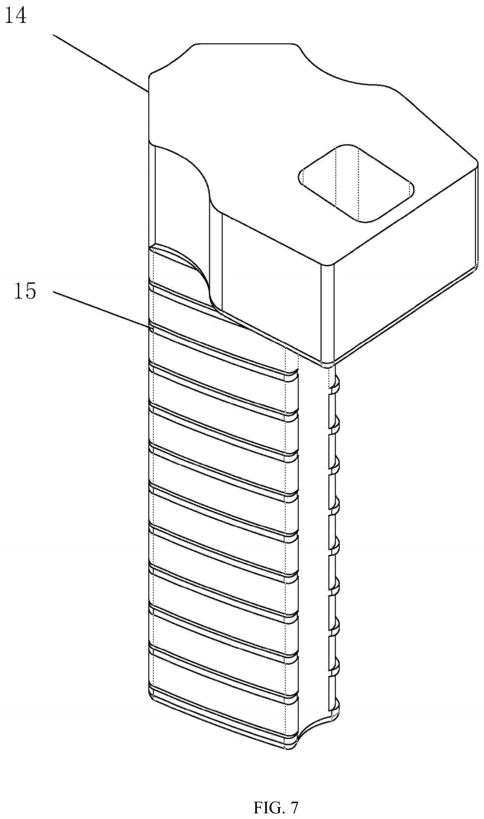

As shown in FIG. 2 to FIG. 7, an electric outboard motor aluminum plate-fin heat dissipation device includes an underwater cooling housing 1. A first cooling cavity 2 and a second cooling cavity 3 are disposed in the underwater cooling housing 1, and the first cooling cavity 2 is communicated with the second cooling cavity 3 by means of a water flow channel. Inner walls of the first cooling cavity 2 and the second cooling cavity 3 both are provided with a plurality of spaced and vertical inner heat dissipation ribs 4, and outer walls of the first cooling cavity 2 and the second cooling cavity 3 both are provided with a plurality of spaced and transverse outer heat dissipation ribs 5. The underwater cooling housing 1 is connected to a sealing cover 6 for sealing the first cooling cavity 2 and the second cooling cavity 3, the sealing cover 6 is connected to a coolant inlet 7 communicated with the first cooling cavity 2, the sealing cover 6 is connected to a coolant outlet 8 communicated with the second cooling cavity 3, and the coolant inlet 7 and the coolant outlet 8 are cyclically communicated with each other by means of a cooling pipe 9 and a cooling recirculating pump 10. A first heat exchange filling block 13 and a second heat exchange filling block 14 which are respectively matched with the first cooling cavity and the second cooling cavity in shape are embedded in the first cooling cavity 2 and the second cooling cavity 3 respectively, and surfaces of the first heat exchange filling block 13 and the second heat exchange filling block 14 both are provided with a plurality of flow guide channels 15 for coolant to flow.

In the present invention, the underwater cooling housing 1 is a housing made of an aluminum alloy material, with the surface subjected to hard anodizing and passivation treatment and the outermost surface coated with marine anti-corrosion paint at the same time, thereby meeting the anti-corrosion requirements for marine working conditions while ensuring the heat conduction efficiency.

In the present invention, the cooling pipe 9 is communicated with built-in heat dissipation recirculating pipes of an inverter 12 and a motor 11.

In the present invention, the first heat exchange filling block 13 and the second heat exchange filling block 14 both are of structures with wide upper portions and narrow lower portions. The widths of the flow guide channels of the first heat exchange filling block 13 and the second heat exchange filling block 14 also differ from top to bottom. The suitable widths can be obtained by optimizing the widths of the flow guide channels based on flow resistance simulation.

In the present invention, the cooling recirculating pump 10 is externally connected to an expansion kettle 16 by means of the cooling pipe.

In the present invention, the coolant in the cooling recirculating pump 10 is 50% ethylene glycol.

In the present invention, the first heat exchange filling block 13 and the second heat exchange filling block 14 are connected to the sealing cover 14 by means of bolts.

In the present invention, the first heat exchange filling block 13 and the second heat exchange filling block 14 both are heat exchange filling blocks made of an anti-corrosion hard plastic material.

The working principle of the present invention is as follows:
In the present invention, by utilizing the excellent heat dissipation performance of the aluminum alloy housing material, the first cooling cavity and second cooling cavity of the underwater housing are combined with the inside first heat exchange filling block and second heat exchange filling block to form an integrated exchanger. All-dimensional heat dissipation requirements of the motor, the inverter, and the reducer can be taken into account. At the same time, one plate heat exchange radiator and one electronic water pump are saved compared with the traditional solution, and the weight can be reduced while improving the efficiency.

The present invention improves heat dissipation power by means of the following approaches:
1. increasing a heat exchange area;
2. improving convection heat exchange efficiency, that is, improving a flow speed on the surface of a heat exchange fluid; and
3. improving heat conduction efficiency of the material.

The present invention performs heat dissipation on the coolant in a lower cavity (the underwater cooling housing) of an outboard motor, then transfers the coolant (for example, the 50% ethylene glycol) on which heat dissipation is performed to the motor and the inverter by means of the cooling recirculating pump, and forms a coolant recirculating system, thereby cooling the motor and the controller.

The underwater cooling housing of the present invention features a lightweight design. The cavity housing is made of the aluminum alloy material and includes two cooling cavities (that is, the first cooling cavity and the second cooling cavity). The coolant inlet is on a right side, and the coolant outlet is on a left side.

The cooling cavities are internally provided with the vertical heat dissipation ribs, to increase the heat dissipation area and improve the heat dissipation performance. The cavities are externally provided with transverse heat dissipation ribs, to increase the heat dissipation area and improve the heat dissipation performance.

The cooling recirculating pump is used for providing power for transporting the coolant for cooling and for constituting the coolant recirculating system.

The cooling pipe is used for providing a channel for the recirculating of the coolant, and the entire system is a closed water cooling system without the need for anti-corrosion treatment.

The expansion kettle is used for replenishing the coolant after loss to enable the system to maintain a good cooling effect and can absorb volume changes in the coolant caused by temperature differences at the same time.

The motor is provided with a built-in heat dissipation recirculating waterway, which is used for heat dissipation of the motor.

The inverter is provided with a built-in heat dissipation recirculating waterway, which is used for heat dissipation of the controller.

The first heat exchange filling block is an anti-corrosion hard plastic member, and an outer surface is provided with a transverse flow channel, which is used for accelerating a flow speed of an internal waterway.

The second heat exchange filling block is an anti-corrosion hard plastic member, and an outer surface is provided with a transverse flow channel, which is used for accelerating a flow speed of an internal waterway.

The two cavities of the underwater cooling housing of the present invention are used as "heat exchangers" of the device. The underwater housing is submerged in seawater for a long time, and the internal coolant exchanges heat with the external seawater by means of an aluminum alloy cavity wall. The coolant flowing in the cavities is the 50% ethylene glycol. The coolant inlet is on the right side of the underwater cooling housing, and the coolant outlet is on the left side of the underwater cooling housing. In addition, the first cooling cavity and the second cooling cavity (that is, a left cavity and a right cavity) are communicated by means of two water flow channels, to ensure that the left and right cavities are in water communication with each other. A water flowing direction is from the right cavity to the left cavity. The left and right cavities are internally provided with the vertical heat dissipation ribs. The internal vertical longitudinal ribs are calculated through flow resistance simulation, mainly to increase the heat dissipation area and improve the heat dissipation power. Similarly, the horizontal heat dissipation ribs are disposed outside the cavities, to increase the heat dissipation area and improve the heat dissipation power. At the same time, the external transverse ribs also undergo the flow resistance simulation, to prevent excessively large flow resistance from affecting the propulsion power. Inner and outer rib plates also enhance the strength of the underwater housing while increasing the heat dissipation surface area.

To increase a flow speed of recirculating water on the surface of the underwater cooling housing, the heat exchange filling blocks made of plastic are mounted in the left and right cavities of the underwater cooling housing respectively. Since the heat exchange filling blocks occupy most of the volume of the internal cavity of the housing, most of the recirculating coolant will flow through the inner surface of the cavity rather than the middle position of the cavity. In this way, the flow speed on the inner surface of the housing can be significantly increased, thereby greatly improving the heat dissipation efficiency. The heat exchange filling blocks are made of the hard plastic material, with a lower density than the coolant, so that the overall weight of the outboard motor can be reduced. The surfaces of the heat exchange filling blocks are provided with the plurality of flow guide channels, so that the water flows from right to left to prevent stagnant water. The filling blocks use the structures with wide upper portions and narrow lower portions to ensure that the water can completely utilize the left and right heat dissipation cavities. All of the above designs are verified by using flow resistance and heat dissipation simulation, completely meeting the heat dissipation requirements of the motor and the inverter while optimizing the internal flow channels to reduce the flow resistance.

The coolant recirculating pump is a common and mature recirculating pump product, with the flow rate and head meeting the design requirements. After the motor is powered on, an internal coolant recirculating pump driven by the coolant recirculating pump transfers the coolant in the cooling cavities to the motor and the controller and forms the coolant recirculating system, thereby cooling the motor, the controller, and the reducer.

To maintain the good cooling effects and capabilities, the cooling device needs to maintain sufficient coolant. Therefore, the cooling device is provided with the expansion kettle, which is used for replenishing the coolant after loss to enable the system to maintain the good cooling effect. At the same time, the volume changes in the coolant caused by the temperature differences can be absorbed. The expansion kettle is a mature transparent plastic kettle in the market that meets the convenience of coolant addition and the requirements of coolant expansion.

The present invention uses a closed internal recirculating cooling system. A cooling loop is completely isolated from external water, and impurities such as salt, sediment, and dirt will not enter a water channel. There is no need to worry about the problems such as corrosion and blockage in the water channel of the housing, and users do not need to rinse the pipe after each use. Maintenance-free operations greatly facilitate the user while also improving the service life of the outboard motor.

It should be noted that similar reference numerals and letters refer to similar items in the following accompanying drawings, and therefore, once an item is defined in one accompanying drawing, it is not necessary to further define and explain the item in the subsequent accompanying drawings.

In the description of the present application, it should be noted that the orientations or positional relationships indicated by the terms "vertical", "horizontal", "inside", "outside", and the like are in accordance with those shown in the accompanying drawings, or refer to orientations or positional relationships in which a product of the present application is typically placed when in use, and are intended only for the convenience of describing the present application and simplifying the description rather than for indicating or implying that the referred device or element must be provided with a particular orientation or constructed and operated in a particular orientation; therefore, they should not be construed as limiting the present application. Furthermore, the terms "first", "second", and the like are merely used for the purpose of distinguishing descriptions and should not be construed as indication or implication of relative importance.

In addition, the terms such as "horizontal" and "vertical" do not imply that the component is required to be absolutely horizontal or vertical, but may be slightly tilted. For example, "horizontal" only refers to its direction being more horizontal relative to "vertical", and does not necessarily mean that the structure must be completely horizontal, but may be slightly tilted.

In the description of the present application, it should be further noted that unless otherwise explicitly specified and limited, the terms "disposed", "mounted", "attached", and "connected" should be understood in a broad sense, for example, it may be a fixed connection, a detachable connection, or an integral connection; it may be a mechanical connection or an electrical connection; it may be a direct connection or an indirect connection through an intermediate medium; and it may be a communication between two elements. For those of ordinary skill in the art, the specific meanings of the above terms in the present application may be understood based on specific conditions.

The above-described embodiments are only preferred embodiments of the present invention and are not intended to limit the present invention. It should be noted that for those of ordinary skill in the art, various improvements and modifications may be made without departing from the technical principles of the present invention. These improvements and modifications should also be regarded as falling within the protection scope of the present invention.

## Claims

1. An electric outboard motor aluminum plate-fin heat dissipation device, **characterized by** comprising an underwater cooling housing (1), wherein a first cooling cavity (2) and a second cooling cavity (3) are disposed in the underwater cooling housing (1), the first cooling cavity (2) is communicated with the second cooling cavity (3) by means of a water flow channel, inner walls of the first cooling cavity (2) and the second cooling cavity (3) both are provided with a plurality of spaced and vertical inner heat dissipation ribs (4), outer walls of the first cooling cavity (2) and the second cooling cavity (3) both are provided with a plurality of spaced and transverse outer heat dissipation ribs (5), the underwater cooling housing (1) is connected to a sealing cover (6) for sealing the first cooling cavity (2) and the second cooling cavity (3), the sealing cover (6) is connected to a coolant inlet (7) communicated with the first cooling cavity (2), the sealing cover (6) is connected to a coolant outlet (8) communicated with the second cooling cavity (3), and the coolant inlet (7) and the coolant outlet (8) are cyclically communicated with each other by means of a cooling pipe (9) and a cooling recirculating pump (10); and a first heat exchange filling block (13) and a second heat exchange filling block (14) which are respectively matched with the first cooling cavity and the second cooling cavity in shape are embedded in the first cooling cavity (2) and the second cooling cavity (3) respectively, and surfaces of the first heat exchange filling block (13) and the second heat exchange filling block (14) both are provided with a plurality of flow guide channels (15) for coolant to flow.

2. The electric outboard motor aluminum plate-fin heat dissipation device according to claim 1, **characterized in that** the underwater cooling housing (1) is a housing made of an aluminum alloy material.

3. The electric outboard motor aluminum plate-fin heat dissipation device according to claim 1, **characterized in that** the cooling pipe (9) is communicated with built-in heat dissipation recirculating pipes of an inverter (12) and a motor (11).

4. The electric outboard motor aluminum plate-fin heat dissipation device according to claim 1, **characterized in that** the first heat exchange filling block (13) and the second heat exchange filling block (14) both are of structures with wide upper portions and narrow lower portions.

5. The electric outboard motor aluminum plate-fin heat dissipation device according to claim 1, **characterized in that** the cooling recirculating pump (10) is externally connected to an expansion kettle (16) by means of the cooling pipe.

6. The electric outboard motor aluminum plate-fin heat dissipation device according to claim 1, **characterized in that** the coolant in the cooling recirculating pump (10) is 50% ethylene glycol.

7. The electric outboard motor aluminum plate-fin heat dissipation device according to claim 1 or 4, **characterized in that** the first heat exchange filling block (13) and the second heat exchange filling block (14) are connected to the sealing cover (14) by means of bolts.

8. The electric outboard motor aluminum plate-fin heat dissipation device according to claim 7, **characterized in that** the first heat exchange filling block (13) and the second heat exchange filling block (14) both are heat exchange filling blocks made of an anti-corrosion hard plastic material.
